# EUROPÄISCHE PATENTSCHRIFT

(11) **EP 3 278 649 B1**
(45) Veröffentlichungstag und Bekanntmachung des Hinweises auf die Patenterteilung: **06.11.2019**
(21) Anmeldenummer: 17184144.8
(22) Anmeldetag: 01.08.2017
(51) Int. Cl.: A01C 7/20

(54) **SÄEINHEIT UND SÄMASCHINE MIT MEHREREN SOLCHER SÄEINHEITEN**
SOWING UNIT AND SOWING MACHINE WITH A PLURALITY OF SUCH SOWING UNITS
SEMOIR ET MACHINE À SEMER COMPRENANT PLUSIEURS SEMOIRS DE CE TYPE

(30) Priorität: 01.08.2016 DE 102016214169
(43) Veröffentlichungstag der Anmeldung: 07.02.2018
(73) Patentinhaber: Horsch Maschinen GmbH, 92421 Schwandorf (DE)
(72) Erfinder: PIRKENSEER, Michael, 92421 Schwandorf (DE); THOMSEN, Jens, 92421 Schwandorf (DE)
(74) Vertreter: Benninger, Johannes

(56) Entgegenhaltungen:
- CA-A1- 2 844 208
- US-A- 6 148 747
- US-A1- 2011 313 572
- US-A1- 2013 104 785
- US-A1- 2015 020 612
- US-B1- 6 701 857

## Beschreibung

Die vorliegende Erfindung betrifft eine insbesondere für den landwirtschaftlichen Einsatz vorgesehene Säeinheit mit den Merkmalen des unabhängigen Anspruchs 1. Die Erfindung betrifft weiterhin eine Sämaschine mit mehreren solcher Säeinheiten.

Bei der Ablage von Saatgut im Boden ist die Einhaltung einer definierten Ablagetiefe wichtig, um dem Saatgut optimale Wachstumsbedingungen bieten zu können. Bekannte Säeinheiten mit ihren Säscharen und Tiefenführungsrollen bieten zwar eine Einstellbarkeit eines Schardrucks und können damit eine Ablagetiefe für das Saatgut definieren, doch führt ein konstanter Schardruck bei unterschiedlichen Bodenverhältnissen zu unerwünschten Abweichungen der tatsächlichen Eindringtiefe des Säschars, so dass es sich in der Praxis als sinnvoll herausgestellt hat, Maßnahmen zur Schardruckregelung zu treffen.

Derartige Stellmechanismen zur hydraulisch unterstützten Konstanthaltung der Furchentiefe beim Einsatz einer Sämaschine sind etwa aus der DE 2 140 410 A sowie aus der DE 33 21 816 A1 bekannt. Dem Säschar unmittelbar zugeordnete oder auch der Sämaschine nachlaufende Tasteinrichtung erfassen hierbei unterschiedliche Bodenhärten und wirken mit den hydraulischen Stellmechanismen zur Variation der Eindringtiefe des Säschars in den Boden zusammen.

Eine in ihrer Wirkungsweise vergleichbare Schardruckregelung mit elektrischem Regelkreis ist zudem aus der DE 34 00 693 A1 bekannt.

Die Zuverlässigkeit und die Genauigkeit der Messdatenerfassung solcher nachlaufenden Taster sind allerdings begrenzt, weshalb nach alternativen Messeinrichtungen zur Gewinnung exakter Regelgrößen gesucht wurde. So weisen verschiedene Anordnungen solcher Schardruckregelungseinrichtungen integrierte Sensoranordnungen auf, die eine separate Erfassung der Bodenverhältnisse mittels Tastelementen verzichtbar machen.

Eine solche Messanordnung, bei der ein Spannungssensor eingesetzt wird, geht bspw. aus der CA 2 549 371 A1 hervor.

Durch die US 2013/0104785 A1 ist eine Sämaschine mit einer Reiheneinheit offenbart, welche Reiheneinheit einen Furchenzieher umfasst. Die Tiefe der Furche ist auf Grundlage eines von einem Sensor erfassten Signals einstellbar. Zur Einstellung der Tiefe der Furche sind ein Furcheneinstellmechanismus und ein daran gekoppeltes Tastrad vorgesehen.

Durch die US 2015/0020612 A1 ist eine weitere Sämaschine mit einer Reiheneinheit offenbart. Bei der vorliegenden Sämaschine ist eine Lastüberwachungseinheit vorgesehen, mittels welcher die Belastung des Tiefenregulierungselements erfasst werden kann. Die Lastüberwachungseinheit kann insbesondere piezoresistive Kraftsensoren umfassen.

Durch die US 6 148 747 A ist eine weitere Sämaschine mit einer Reiheneinheit offenbart. Zur Bestimmung der Tiefe von den Furchenziehern sind Tiefenführungsräder vorgesehen. Die Tiefe der Furchenzieher wird mittels eines Hebelmechanismus eingestellt, welcher einen gegabelten Hebel und einen Schaft umfasst.

Bei einer Schardruckregeleinrichtung einer Sämaschine, wie sie in der EP 2 353 354 A1 offenbart ist, befindet sich im Bereich einer verstellbaren Abstützung einer Tiefenführungsrolle ein Messfühler, der den Abstützdruck der Tiefenführungsrolle erfasst und der Regeleinrichtung damit Werte zur Verstellung der Aufhängung der Tiefenführungsrolle zur Aufrechterhaltung einer weitgehend konstanten Andrückkraft der Tiefenführungsrolle liefert.

Eine weitere Tiefenführungsregelung für eine Säeinheit findet sich in der US 6 701 857 B1. Die Messwerterfassung erfolgt mittels eines Kraftmessbolzens, der sich in der Aufhängung bzw. Lagerung einer hydraulisch höhenverstellbaren Andruckrolle befindet.

Eine weitere Ausführungsform einer Tiefenführungsregelung ist durch die US 2011/0313572 A1 offenbart. Hierbei ist die Tiefe einer Scheibe variabel durch ein Stellrad und einem damit zusammenwirkenden Stellrad-Radarm mit einem Griff einstellbar, welcher Stellrad-Radarm in Kerben einer fächerartigen Scheibe eingreift. Auf dem Stellrad-Rardarm kann eine Messeinrichtung beispielsweise in Form eines Dehnmessstreifens oder einer Kraftmessdose oder dergleichen vorgesehen sein.

Die CA 2 844 208 A1 offenbart eine weitere Ausführungsvariante einer Tiefenführungsregelung. Die Tiefe der Furche wird durch Tiefenführungsräder eingestellt, welche jeweils über Tragarme schwenkbar an einem Rahmen montiert sind. Weiter ist ein Tiefeneinstellarm vorgesehen, welcher schwenkbar um einen Stift am Rahmen montiert ist und den Tragarm von oben berührt, so dass hierdurch eine Aufwärtsbewegung des Tiefenführungsrads begrenzt wird. Am Tragarm können diverse Sensoren zur Messung einer vertikalen Kraft zwischen dem Tiefenführungsrad und der Oberfläche des Bodens vorgesehen sein.

Einige Bauformen die bekannten Sensoranordnungen sind störungsanfällig und nicht vor mechanischen Beschädigungen geschützt, da sie als separate Messanordnungen mit den Höhenverstellmechanismen der Andruckrollen verbunden sind. Eine weitere Bauform, die Kraftmessbolzen als Sensoren verwendet, hat den Nachteil, dass auf diese Kraftmessbolzen relativ hohe Kräfte wirken, da sie gleichzeitig als Achsen von Schwenklagerungen fungieren, so dass sie in der Praxis einem erhöhten Verschleiß unterliegen. Zudem können als Kraftmessbolzen oftmals keine normierten Standardbauteile eingesetzt werden, so dass diese Bauformen kostenintensiv sind.

Angesichts der im bekannten Stand der Technik festgestellten verschiedenen Nachteile besteht ein vorrangiges Ziel der vorliegenden Erfindung darin, eine einfach aufgebaute und kostengünstig zu realisierende Messwerterfassung für eine Sämaschine bzw. für eine Säeinheit einer solchen Sämaschine zur Verfügung zu stellen, die eine zuverlässige und exakte Schardruckregelung ermöglicht. Die für die Messdatenerfassung eingesetzte Sensorik soll kostengünstig verfügbar sein und vorzugsweise mit leicht verfügbaren Standardbauteilen realisierbar sein.

Zur Lösung des genannten Ziels schlägt die Erfindung eine Säeinheit mit einem Tragrahmen vor, an dem schwenkbeweglich mindestens ein Radträger mit einem höhenverstellbaren Tiefenführungsrad gelagert ist. Diese Säeinheit ist typischerweise Teil einer Sämaschine, die mindestens eine solche Säeinheit umfasst, die normalerweise jedoch mehrere solcher Säeinheiten in paralleler Anordnung aufweist. Das schwenkbeweglich gelagerte und damit in seiner Höhe gegenüber dem Tragrahmen verstellbare Tiefenführungsrad kann einem Säschar in Bewegungsrichtung der Sämaschine vor- oder nachgeordnet sein; das schwenkbeweglich gelagerte und in seiner Höhe gegenüber dem Tragrahmen verstellbare Tiefenführungsrad kann wahlweise auch neben dem Säschar angeordnet sein. Bei dem Säschar selbst kann es sich bspw. um ein schräg in den Boden eingreifendes Einfachschar, um ein Doppelscheibensäschar oder prinzipiell um weitgehend jede andere denkbare Bauform eines Säschars handeln. Schließlich kann dem Säschar und dem Tiefenführungsrad ein geeignetes Werkzeug zum Rückverfestigen des Bodens nachgeordnet sein, so bspw. eine Rückverfestigungsrolle, ein Rollen- oder Radpaar, wahlweise in V-Anordnung, o. dgl. Werkzeug.

Wenn zudem im vorliegenden Zusammenhang von einem Radträger die Rede ist, an dem das Tiefenführungsrad drehbar gelagert ist, so kann dies etwa eine einfache Gabel zur beidseitigen Führung einer Radachse oder auch eine einseitige Aufhängung für das Tiefenführungsrad o. dgl. sein. Diese Gabel oder Aufhängung, die den Radträger bildet, ist schwenkbar am Tragrahmen gelagert, wobei es sich bei diesem Tragrahmen um einen Rahmenabschnitt handeln kann, der wiederum eine höhenverstellbare Aufhängung bildet, die an einem Rahmenteil einer Sämaschine befestigt ist. Die höhenverstellbare Aufhängung ermöglicht eine gleichmäßige Führung für die in den Boden eingreifenden Wirkelemente der Säeinheit, insbesondere unter Aufrechterhaltung einer weitgehend konstantem Auflagekraft für das Säschar sowie das Tiefenführungsrad, so dass sich unabhängig von der Bodengestaltung und den Bodenverhältnissen eine weitgehend konstante Eindringtiefe für das Säschar und damit eine weitgehend konstante Ablagetiefe für die auszubringenden Saatkörner im Boden gewährleisten lassen.

Der um eine im Wesentlichen quer zu einer Fahrtrichtung angeordneten Achse schwenkbewegliche Radträger der Säeinheit ist über mindestens eine Koppelstange mit einem Höheneinstellmechanismus für eine Höheneinstellbarkeit des Tiefenführungsrades gekoppelt. Diese Höheneinstellbarkeit definiert normalerweise im Wesentlichen einen Anschlag für ein maximales Eintauchen des Tiefenführungsrades gegenüber dem Tragrahmen, lässt jedoch beim Ausheben der Säeinheit das Tiefenführungsrad nach unten schwenken. Wenn in diesem Zusammenhang von mindestens einer Koppelstange die Rede ist, so umfasst diese Definition auch ein Parallelogrammgestänge, d.h. zwei in etwa parallele Koppelstangen, die eine gelenkige Verbindung zwischen dem Radträger und dem Höheneinstellmechanismus herstellen. Der Höheneinstellmechanismus, wie in die vorliegende Erfindung definiert, ist durch ein Lochraster zur variablen Aufnahme einer Anschlagstange gebildet, die mit einer an der Koppelstange angelenkten Anschlagscheibe zusammenwirkt, wobei die Anschlagscheibe durch Anlage an den in ein gewünschtes Aufnahmeloch eingeschobenen Anschlagbügel den maximalen Schwenkweg des Radträgers und damit die Eintauchtiefe des Tiefenführungsrades gegenüber dem Tragrahmen begrenzt.

Zudem ist der mindestens einen Koppelstange und/oder deren Gelenk- und/oder Verbindungsstellen mit dem schwenkbeweglichen Radträger bzw. mit dem Höheneinstellmechanismus mindestens eine Kraftmesseinrichtung zur Erfassung der im Betrieb der Säeinheit auf die Koppelstange und/oder deren Gelenk- und/oder Verbindungsstellen mit dem schwenkbeweglichen Radträger bzw. mit dem Höheneinstellmechanismus wirkenden Druck- und/oder Zugspannungen zugeordnet. Die mindestens eine Kraftmesseinrichtung dient im Wesentlichen der Erfassung der tatsächlich auf die Säeinheit wirkenden Kräfte, die in unmittelbarem Zusammenhang mit den Anpressdrücken stehen, die auf das Tiefenführungsrad wirken und die je nach Bodenverhältnissen mehr oder weniger stark schwanken können. Da eine solche Säeinheit, wie sie durch die Erfindung definiert ist, mit möglichst gleichmäßigem Druck arbeiten soll, der über das Tiefenführungsrad sowie teilweise über das mindestens eine Säschar oder die Säschare in den Boden eingeleitet wird, sind normalerweise regelbare Stellzylinder oder dergleichen Stelleinrichtungen vorhanden, die über einen Maschinenrahmen der jeweiligen Säeinheit bzw. der Sämaschine auf die Säeinheit bzw. auf das jeweilige höhenverstellbare Tiefenführungsrad wirken und auf diese Weise in die Lage versetzt sind, eine variable Anpresskraft auf die Säeinheit auszuüben. Durch die Regelbarkeit solcher Stellzylinder oder Stelleinrichtungen auf Grundlage der der jeweiligen Säeinheit zugeordneten Kraftmesseinrichtung kann der Bodendruck bzw. Schardruck im Betrieb der Sämaschine weitgehend konstant bzw. innerhalb definierbarer Grenzwerte gehalten werden.

Bei der erfindungsgemäßen Säeinheit kann die mindestens eine Kraftmesseinrichtung bspw. durch einen auf Dehnungen und/oder Stauchungen sensitiven Sensor gebildet sein, dessen elektrischer Widerstand oder dessen spezifischer Widerstand sich mit auf den Sensor wirkenden Dehnungen und/oder Stauchungen verändert. Wahlweise kann die mindestens eine Kraftmesseinrichtung auch durch einen auf Dehnungen und/oder Stauchungen sensitiven Sensor gebildet sein, dessen elektrische Kapazität sich mit auf den Sensor wirkenden Dehnungen und/oder Stauchungen verändert. Eine häufig eingesetzte Bauform solcher Kraftmesseinrichtung sind Dehnungsmessstreifen, so dass die Kraftmesseinrichtung bei der erfindungsgemäßen Säeinheit wahlweise durch wenigstens einen Dehnungsmessstreifen gebildet sein kann.

Eine besonders vorteilhafte Variante der erfindungsgemäßen Säeinheit kann vorsehen, dass die mindestens eine Kraftmesseinrichtung durch wenigstens zwei schaltungstechnisch gekoppelte Dehnungsmessstreifen mit zueinander nicht parallelen Hauptmessrichtungen gebildet ist. Hierdurch kann einerseits eine ständige Kalibrierung der Dehnungsmessstreifen erfolgen, zudem können die Messwerte exakter reproduziert werden. Bei Verwendung von Dehnungsmessstreifen als Kraftmesseinrichtung kann dieser bzw. können diese an einer Oberfläche der Koppelstange angebracht sein oder einen baulichen Teil der Koppelstange bilden und/oder baulich in diese integriert sein.

Wahlweise kann die mindestens eine Kraftmesseinrichtung auch durch einen Kraftmessbolzen gebildet sein, der im Bereich einer Gelenkstelle bzw. einer gelenkigen Koppelstelle der Koppelstange zum schwenkbeweglichen Radträger und/oder zum Höheneinstellmechanismus angeordnet bzw. einen Teil einer solchen Gelenkstelle bilden kann. So kann der Kraftmessbolzen etwa eine Schwenkachse für die Koppelstange bilden. Somit kann bei einer Variante der erfindungsgemäßen Säeinheit die Kraftmesseinrichtung durch einen der Gelenkstelle und/oder Verbindungsstelle der Koppelstange zum schwenkbeweglichen Radträger zugeordneten Kraftmessbolzen gebildet sein. Wahlweise kann bei einer weiteren Variante der erfindungsgemäßen Säeinheit die Kraftmesseinrichtung durch einen der Gelenkstelle und/oder Verbindungsstelle der Koppelstange zum Höheneinstellmechanismus zugeordneten Kraftmessbolzen gebildet sein. D.h. hierbei ist der Bolzen der Kraftmesseinrichtung dem Höheneinstellmechanismus zugeordnet. Vorzugsweise bildet die Kraftmesseinrichtung bzw. der Kraftmessbolzen einen integrierten Teil der Gelenkstelle und kann z.B. die Achse bilden.

Weiterhin kann bei der erfindungsgemäßen Säeinheit vorgesehen sein, dass die mindestens eine Kraftmesseinrichtung signaltechnisch mit einer Steuer- und/oder Auswerteschaltung gekoppelt ist, die einen Stellzylinder zur Variation des Schardrucks der Säeinheit ansteuert.

Zur Erreichung des oben genannten Ziels schlägt die Erfindung weiterhin eine Sämaschine vor, die mit wenigstens zwei Säeinheiten gemäß einer der zuvor beschriebenen Ausführungsvarianten ausgestattet ist. Zudem verfügt diese Sämaschine über eine Steuer- und/oder Auswerteschaltung, die für die Verarbeitung der Sensordaten der wenigstens zwei Kraftmesseinrichtungen ausgestattet bzw. vorbereitet ist, und die jeweils den einzelnen Säeinheiten zugeordnete separate Stellzylinder zur Variation des jeweiligen Schardrucks ansteuert. Die Kraftmesseinrichtung liefert der Steuer- und/oder Auswerteschaltung die gewünschten Messwerte, die einen Rückschluss auf die auf das Tiefenführungsrad wirkenden Kräfte erlauben und dort weiterverarbeitet werden. Auf Basis der ermittelten Werte wird jeweils ein Zylinder über die Rechnereinheit in gewünschter Weise angesteuert, wodurch sich jeweils ein gewünschter Schardruck einstellen lässt.

Die Erfindung kann zudem vorsehen, dass an der landwirtschaftlichen Maschine eine Mehrzahl derartiger Säeinheiten angebracht sind wobei diese wiederum alle mit dem gleichen Schardruck beaufschlagt werden können oder jedes Schar separat angesteuert werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante einer Sämaschine mit mehreren Säeinheiten, die in paralleler Anordnung an einem Querträger der Sämaschine gehalten sind.
Fig. 2A zeigt eine perspektivische Ansicht einer Ausführungsvariante einer erfindungsgemäßen Säeinheit, die Teil einer Sämaschine gemäß Fig. 1 ist.
Fig. 2B zeigt eine weitere perspektivische Ansicht der Säeinheit gemäß Fig. 2A.
Figuren 3A und 3B zeigen jeweils schematische Seitenansichten der Säeinheit gemäß Fig. 2A und Fig. 2B.
Fig. 4A zeigt einen schematischen Längsschnitt der Säeinheit gemäß Figuren 2A bis 3B.
Fig. 4B zeigt einen Detailausschnitt der Fig. 4A mit einer als Dehnungsmessstreifen ausgebildeten Kraftmesseinrichtung der Säeinheit.
Fig. 4C zeigt einen Detailausschnitt der Fig. 4A mit einer als Kraftmessbolzen ausgebildeten Kraftmesseinrichtung der Säeinheit.
Fig. 4D zeigt einen weiteren Detailausschnitt der Fig. 4A mit einer als Kraftmessbolzen ausgebildeten Kraftmesseinrichtung der Säeinheit.

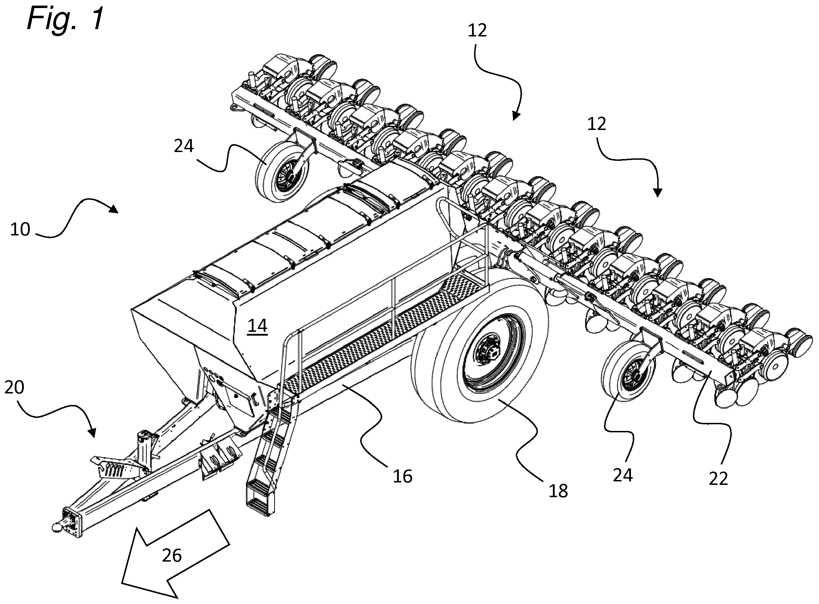

Für gleiche oder gleich wirkende Elemente der Erfindung verwenden die Figuren 1 bis 4D jeweils gleiche Bezugsziffern. Ferner werden der Übersicht halber nur solche Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Außerdem sei darauf hingewiesen, dass die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, unabhängig voneinander oder in beliebiger Kombination verwendet werden können. Merkmale, die in Verbindung mit einer Ausführungsform beschrieben werden, sind für alle Ausführungsformen anwendbar, sofern die Merkmale nicht unvereinbar sind.

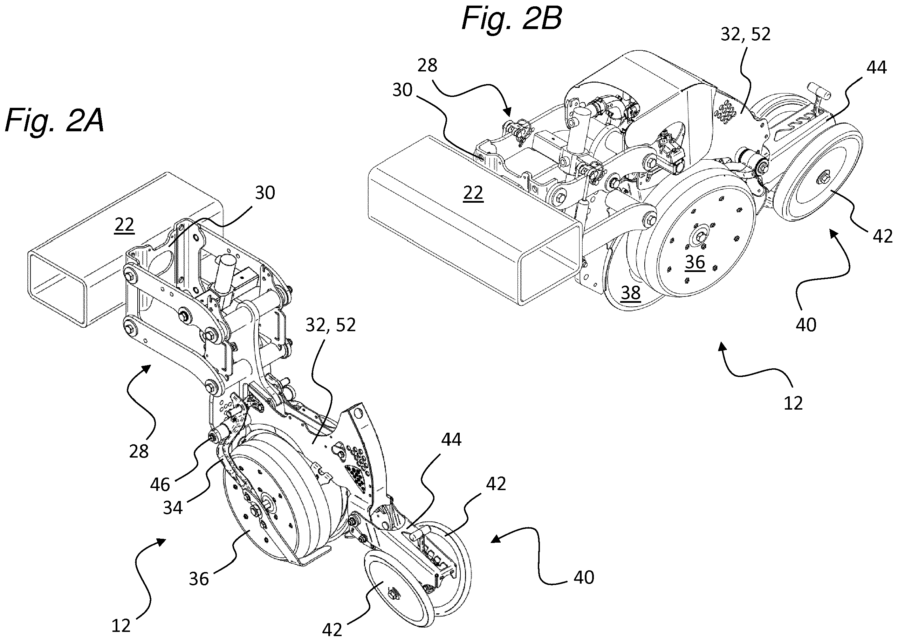

Die schematische Perspektivansicht der Fig. 1 zeigt eine Ausführungsvariante einer für einen landwirtschaftlichen Einsatz vorgesehenen Sämaschine 10, die mit einer Vielzahl von erfindungsgemäßen Säeinheiten 12 ausgestattet ist, deren Aufbau und Funktionsweise nachfolgend unter Bezugnahme auf die Figuren 2A bis 4D in mehreren Ausführungsvarianten näher erläutert wird. Die gezeigte Sämaschine 10 kann eine Drillmaschine bzw. eine Einzelkornsämaschine bekannter Bauart mit pneumatischer Kornförderung sein. Die Sämaschine 10 kann jedoch auch eine Einzelkornsämaschine mit zentralem Korntank 14 sein, bei der die einzelnen Säeinheiten 12 über eine pneumatische Versorgung aus dem zentralen Korntank 14 mit Saatgut versorgt werden, was einem sog. "Seed-on-demand-System" entspricht. Sofern die Säeinheiten 12 als Einzelkornsäaggregate ausgebildet sind, verfügen sie meist über einen eigenen kleineren Kornvorrat, der im Betrieb der Sämaschine 10 ständig aus dem zentralen Korntank 14 nachgespeist wird. Ein Leitungssystem zur Versorgung der Säeinheiten 12 mit Saatgut aus dem zentralen Korntank 14 ist in Fig. 1 der besseren Übersichtlichkeit halber nicht dargestellt.

Die Sämaschine 10 weist ein Fahrgestell 16 mit zwei großen Tragrädern 18 und frontseitiger Zugdeichsel 20 zur Verbindung mit einem landwirtschaftlichen Zugfahrzeug (nicht gezeigt) auf. Heckseitig ist die Sämaschine 10 mit einem Querträger 22 ausgestattet, der als Trägerschiene für eine parallele Anordnung von insgesamt zwölf gleichartigen Säeinheiten 12 nebeneinander dient. Der typischerweise höhenverstellbare Querträger 22 ist mit zwei zusätzlichen Stützrädern 24 ausgestattet, die in Fahrtrichtung 26 frontseitig am Querträger 22 angeordnet sind, während die Säeinheiten 12 naturgemäß heckseitig am Querträger 22 angeordnet sind. Die Stützräder 24 dienen der Abstützung der Gesamtheit der insgesamt zwölf nebeneinander am Querträger 22 fixierten Säeinheiten 12 bei einer Feldfahrt und der Sicherstellung einer passenden Höhe des Querträgers 22 über dem Boden, so dass eine exakte Feineinstellung der jeweiligen Höhe jeder Säeinheit 12 mittels der diesen jeweils zugeordneten hydraulischen Stelleinrichtungen (vgl. Figuren 2A ff.) erfolgen kann.

Die in Fig. 1 gezeigte Anordnung von insgesamt zwölf gleichartigen Säeinheiten 12 nebeneinander ist lediglich als beispielhafte Ausführungsvariante zu verstehen; wahlweise können auch mehr als zwölf solche Säeinheiten 12 am Querträger 22 in paralleler Anordnung nebeneinander befestigt sein, wahlweise jedoch auch weniger als zwölf. Wie es die Fig. 1 erkennen lässt, können die Säeinheiten 12 jeweils mit gleichen Abständen voneinander am Querträger 22 befestigt sein. Allerdings sind auch Ausführungsvarianten denkbar, bei denen die Abstände unterschiedlich groß sein können, was bspw. für eine Konfiguration sinnvoll sein kann, bei der Fahrgassen zwischen benachbarten Säeinheiten 12 freigehalten werden, so dass die Abstände zwischen diesen beiden Säeinheiten 12 größer ausfallen können als zwischen den übrigen Säeinheiten 12.

Die schematischen Perspektivansichten der Figuren 2A und 2B verdeutlichen eine mögliche Ausführungsvariante einer solchen erfindungsgemäßen Säeinheit 12 sowie deren in der Höhe verstellbaren Aufhängung 28, über die die Säeinheiten 12 jeweils am Querträger 22 befestigt sind. Die gesamte Säeinheit 12 ist über ein kurzes Parallelogrammgestänge, welches die Aufhängung 28 bildet, am Querträger 22 verankert, insbesondere über eine Flanschplatte 30 verschraubt.

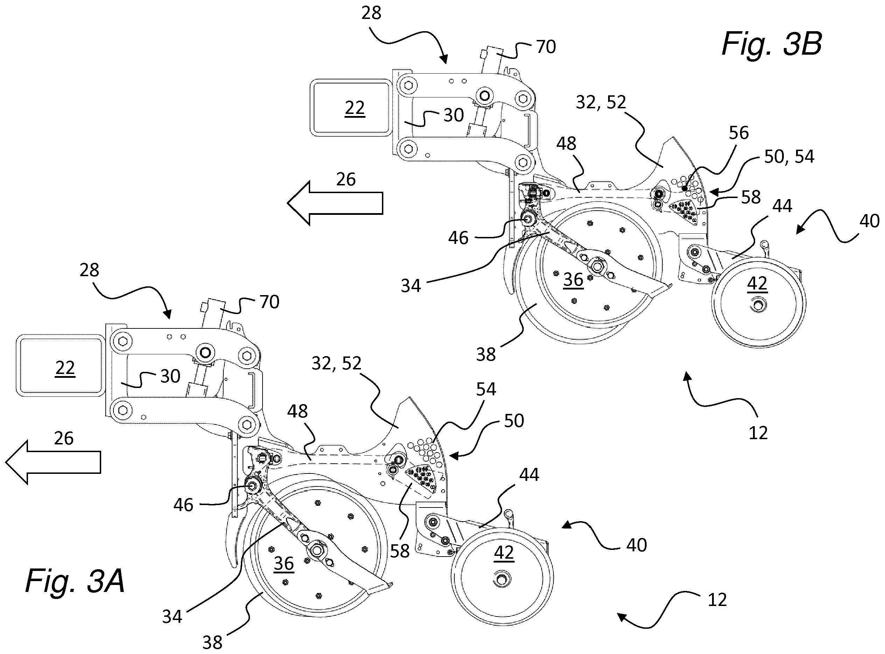

Wie es die Figuren 2A, 2B, 3A und 3B erkennen lassen, weist die Säeinheit 12 einen Tragrahmen 32 auf, an dem schwenkbeweglich ein Radträger 34 gelagert ist, der im gezeigten Ausführungsbeispiel als einseitige Aufhängung für das daran drehbar gelagert Tiefenführungsrad 36 gebildet ist. Dieses Aufhängungsblech, das den Radträger 34 bildet, ist schwenkbar am Tragrahmen 32 gelagert, wobei es sich bei diesem Tragrahmen 32 um einen Rahmenabschnitt handelt, der über die höhenverstellbare Aufhängung 28 am Querträger 22 der Sämaschine 10 befestigt ist. Die höhenverstellbare Aufhängung 28 ermöglicht durch ihre Parallelogrammanordnung eine gleichmäßige Führung für die in den Boden eingreifenden Wirkelemente der Säeinheit 12, insbesondere unter Aufrechterhaltung einer weitgehend konstantem Auflagekraft für ein Säschar 38 sowie für das neben dem als Scheibenschar ausgebildeten Säschar 38 angeordneten Tiefenführungsrad 36, so dass sich unabhängig von der Bodengestaltung und den Bodenverhältnissen eine weitgehend konstante Eindringtiefe für das Säschar 38 und damit eine weitgehend konstante Ablagetiefe für die auszubringenden Saatkörner im Boden gewährleisten lassen.

In Fahrtrichtung 26 gesehen heckseitig an der Säeinheit 12 befindet sich zudem ein Rückverfestigungswerkzeug 40 bzw. ein Werkzeug zum Furchenschließen, das im gezeigten Ausführungsbeispiel durch ein Radpaar gebildet ist, wobei die beiden nebeneinander angeordneten Räder 42 leicht V-förmig gegeneinander angestellt sind, so dass sie jeweils einen deutlich positiven Radsturz aufweisen. Die Räder 42 sind an einem schwenkbar am Tragrahmen 32 gelagerten Ausleger 44 gelagert, so dass sie ohne nennenswerte Beeinflussung der Tiefeneinstellung des Säschars 38 mit Hilfe des Tiefenführungsrades 36 der Säeinheit 12 nachlaufen und für die gewünschte Rückverfestigung des Bodens bzw. für ein Einebnen und/oder Schließen der durch das Säschar 38 geöffneten Furche sorgen können.

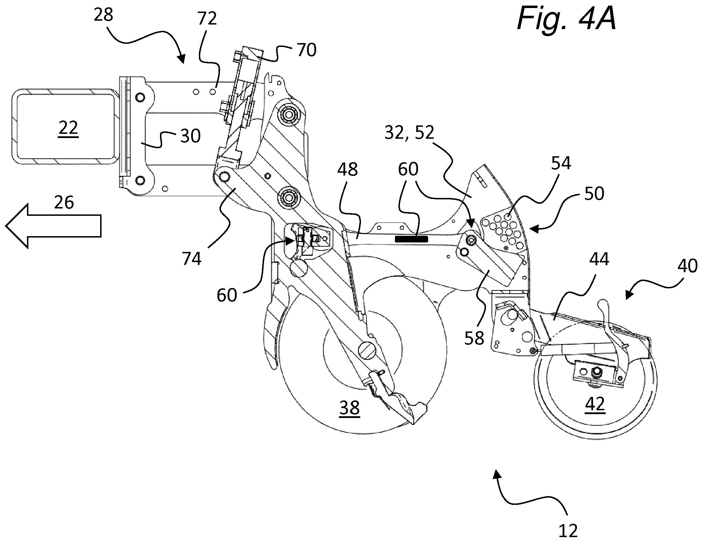

Wie es die schematischen Seitenansichten der Figuren 3A und 3B besser verdeutlichen, ist der um eine im Wesentlichen quer zur Fahrtrichtung 26 angeordneten Schwenkachse 46 schwenkbewegliche Radträger 34 der Säeinheit 12 über eine in etwa horizontal und parallel zur Fahrtrichtung 26 liegende Koppelstange 48 gelenkig mit einem Höheneinstellmechanismus 50 verbunden, wobei der Höheneinstellmechanismus 50 im Wesentlichen einen Schwenkanschlag für den Radträger 34 mit dem darin gelagerten Tiefenführungsrad 36 definiert. In den Figuren 3A und 3B ist die Koppelstange 48 jeweils in unterbrochenen Linien dargestellt, da sie innerhalb der äußeren Rahmenbleche 52 des Tragrahmens 32 verläuft; die Koppelstange 48 ist in der Längsschnittansicht der Fig. 4A nochmals deutlich erkennbar.

Die durch den Mechanismus 50 gegebene Höheneinstellbarkeit definiert im Wesentlichen einen Anschlag für ein maximales Eintauchen des Tiefenführungsrades 36 gegenüber dem Tragrahmen 32 (vgl. Fig. 3B), lässt jedoch beim Ausheben der Säeinheit 12 das Tiefenführungsrad 36 nach unten schwenken (vgl. Fig. 3A). Der Höheneinstellmechanismus 50 ist gemäß Erfindung durch ein Lochraster 54 zur variablen Aufnahme einer Anschlagstange 56 (vgl. Fig. 3B; in Fig. 3A nicht erkennbar) gebildet, die mit einer an der Koppelstange 48 angelenkten und durch diese verschwenkte Anschlagscheibe 58 zusammenwirkt, wobei die Anschlagscheibe 58 durch Anlage an die in ein gewünschtes Aufnahmeloch des Lochrasters 54 eingeschobene Anschlagstange 56 den maximalen Schwenkweg des Radträgers 34 und damit die Eintauchtiefe des Tiefenführungsrades 36 gegenüber dem Tragrahmen 32 und damit gegenüber der gesamten Säeinheit 12 begrenzt.

Die Darstellung der Fig. 3B verdeutlicht die von unten an die Anschlagstange 56 anschlagende Anschlagscheibe 58, wodurch eine weitere Längsverschiebung der Koppelstange 48 parallel zur und in selber Richtung wie die Fahrtrichtung 26 verhindert ist. Wenn das Tiefenführungsrad 36 dagegen unbelastet ist, kann es gemäß Fig. 3A nach unten schwenken, wobei gleichzeitig die Koppelstange 48 entgegen der Fahrtrichtung 26 verschoben und die Anschlagscheibe 58 nach unten von der Anschlagstange 56 weggeschwenkt wird; diese Anschlagstange 56 befindet sich allerdings in der Darstellung der Fig. 3A nicht im Lochraster 54.

Wie es zudem die Figuren 4A bis 4D in verschiedenen Ausführungsvarianten verdeutlichen, kann der Koppelstange 48 und/oder deren Gelenk- und/oder Verbindungsstellen mit dem schwenkbeweglichen Radträger 34 bzw. mit dem Höheneinstellmechanismus 50 mindestens eine Kraftmesseinrichtung 60 zur Erfassung der im Betrieb der Säeinheit 12 auf die Koppelstange 48 und/oder deren Gelenk- und/oder Verbindungsstellen mit dem schwenkbeweglichen Radträger 34 bzw. mit dem Höheneinstellmechanismus 50 wirkenden Druck- und/oder Zugspannungen zugeordnet sein. Die Kraftmesseinrichtung 60 kann insbesondere durch einen auf Dehnungen und/oder Stauchungen sensitiven Sensor gebildet sein, dessen elektrischer Widerstand oder dessen spezifischer Widerstand sich mit auf den Sensor wirkenden Dehnungen und/oder Stauchungen verändert. Wahlweise kann die mindestens eine Kraftmesseinrichtung 60 auch durch einen auf Dehnungen und/oder Stauchungen sensitiven Sensor gebildet ist, dessen elektrische Kapazität sich mit auf den Sensor wirkenden Dehnungen und/oder Stauchungen verändert. Eine häufig eingesetzte Bauform solcher Kraftmesseinrichtung 60 sind Dehnungsmessstreifen 62, so dass die Kraftmesseinrichtung 60 bei der erfindungsgemäßen Säeinheit 12 wahlweise durch mindestens einen solchen Dehnungsmessstreifen 62 gebildet sein kann.

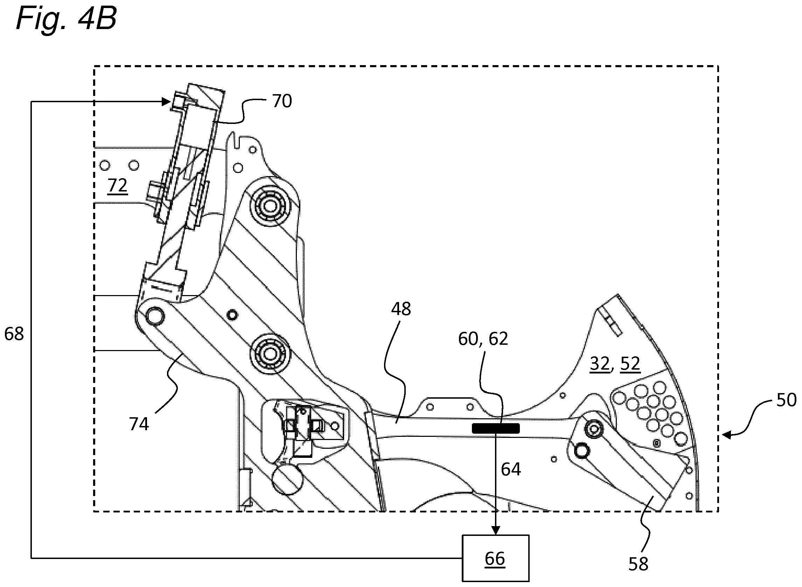

Dieser mindestens eine Dehnungsmessstreifen 62 kann gemäß Fig. 4B insbesondere der Koppelstange 48 zugeordnet bzw. auf deren Oberfläche aufgebracht sein, so dass alle auf die Koppelstange 48 wirkenden Zug- und Druckkräfte unmittelbar in ein elektrisches Ausgangssignal 64 umgewandelt und einer Steuer- und/oder Auswerteschaltung 66 zugeführt werden, die mittels entsprechend gewandelter Stellsignale 68 einen Stellzylinder 70 zur Variation des Schardrucks der Säeinheit 12 ansteuert.

Wie es der schematische Längsschnitt der Fig. 4A und der Detailausschnitt der Fig. 4B erkennen lassen, wirkt der an einem oberen Lenker 72 der Aufhängung 28 angelenkte hydraulische Stellzylinder 70 direkt auf einen starr mit dem Tragrahmen 32 verbundenen Ausleger 74, so dass über den Stellzylinder 70 eine unmittelbare Beeinflussung des von dem Säschar 38 auf den Boden wirkenden Schardrucks ermöglicht ist.

Wahlweise kann vorgesehen sein, dass die mindestens eine Kraftmesseinrichtung 60 durch wenigstens zwei schaltungstechnisch gekoppelte Dehnungsmessstreifen 62 mit zueinander nicht parallelen Hauptmessrichtungen gebildet ist (nicht gezeigt), was zu exakteren Messwerten und damit zu präziseren Regelungsvorgängen beitragen kann. Bei der Verwendung von solchen Dehnungsmessstreifen 62 als Kraftmesseinrichtung 60 kann dieser bzw. können diese an einer Oberfläche der Koppelstange 48 angebracht sein oder einen baulichen Teil der Koppelstange 48 bilden und/oder baulich in diese integriert sein.

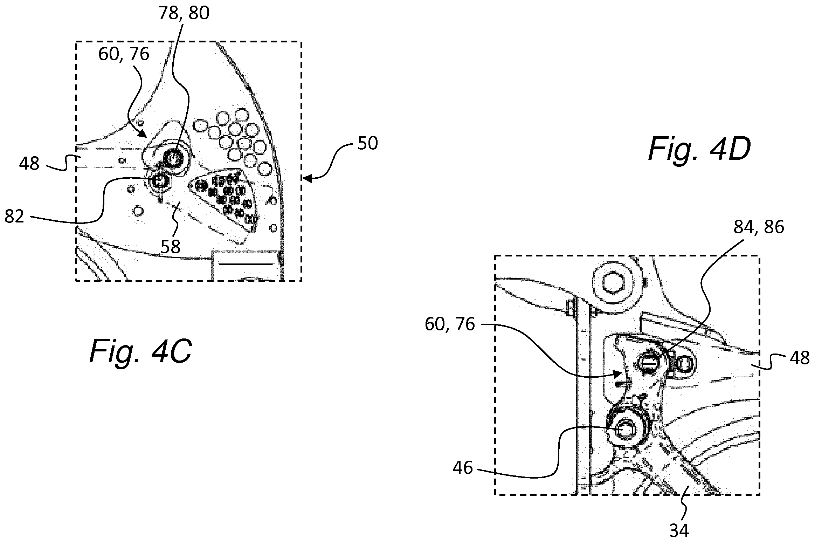

Wie es der weitere Detailausschnitt der Fig. 4C erkennen lässt, kann die Kraftmesseinrichtung 60 wahlweise auch durch einen Kraftmessbolzen 76 gebildet sein, der im Bereich einer gelenkigen Koppelstelle 78 der Koppelstange 48 zum Höheneinstellmechanismus 50 angeordnet ist. In diesem Fall bildet der Kraftmessbolzen 76 eine Schwenkachse 80 für eine gelenkige Verbindung der Koppelstange 48 zum Höheneinstellmechanismus 50, so dass bei der gezeigten Variante der Säeinheit 12 die Kraftmesseinrichtung 60 durch einen der Gelenkstelle und/oder Verbindungsstelle 78 der Koppelstange 48 zum Höheneinstellmechanismus 50 zugeordneten Kraftmessbolzen 76 gebildet ist. Vorzugsweise bildet die Kraftmesseinrichtung 60 bzw. der Kraftmessbolzen 76 einen integrierten Teil der Gelenkstelle und kann insbesondere die Schwenkachse 80 selbst bilden. Wie es die Fig. 4C verdeutlicht, wird durch horizontale Verschiebung der Koppelstange 48 die Schwenkachse 80, welche die gelenkige Koppelstelle 78 zum Höheneinstellmechanismus 50 bildet, eine horizontale Bewegung auf die Anschlagscheibe 58 ausgeübt, die hierbei um ein unterhalb der Koppelstelle 78 befindliches Schwenkgelenk 82 bewegt wird. Das Schwenkgelenk 82 lagert die Anschlagscheibe 58 in den Rahmenblechen 52 des Tragrahmens 32.

Der Kraftmessbolzen 76 liefert ein in Fig. 4C nicht näher gezeigtes Ausgangssignal 64, das in der Steuer- und/oder Auswerteschaltung 66 zur Generierung eines Stellsignals 68 für den hydraulischen Stellzylinder 70 verarbeitet wird (siehe hierzu Fig. 4B). Das vom Kraftmessbolzen 76 gelieferte elektrische Ausgangssignal 64 liefert einen direkten Zusammenhang zwischen den über das Tiefenführungsrad 36 und dessen Radträger 34 auf die Koppelstange 48 übertragenen Kräfte, insbesondere bei Anlage der Anschlagscheibe 58 an der Anschlagstange 56, wenn das Tiefenführungsrad 36 an seinen oberen Anschlag verschwenkt ist.

Wie es zudem der weitere Detailausschnitt der Fig. 4D erkennen lässt, kann die Kraftmesseinrichtung 60 wahlweise auch durch einen Kraftmessbolzen 76 gebildet sein, der im Bereich einer gelenkigen Koppelstelle 84 der Koppelstange 48 zum schwenkbeweglichen Radträger 34 angeordnet ist. In diesem Fall bildet der Kraftmessbolzen 76 eine Schwenkachse 86 zur Verbindung der Koppelstange 48 zum schwenkbeweglichen Radträger 34, der um die Schwenkachse 46 beweglich ist, die unterhalb der Schwenkachse 86 angeordnet ist. Auf diese Weise kann bei der in Fig. 4D gezeigten Variante der Säeinheit 12 die Kraftmesseinrichtung 60 durch einen der Gelenkstelle und/oder Verbindungsstelle 84 der Koppelstange 48 zum Radträger 34 zugeordneten Kraftmessbolzen 76 gebildet sein. Auch hier kann bevorzugt vorgesehen sein, dass die Kraftmesseinrichtung 60 bzw. der Kraftmessbolzen 76 einen integrierten Teil der Gelenkstelle und insbesondere die Schwenkachse 86 selbst bilden kann. Wie es die Fig. 4D verdeutlicht, bewirkt die Verschwenkung des Radträgers 34 um die Schwenkachse 46 eine bogenförmige Bewegung der Koppelstelle 84 und damit eine in etwa horizontale Verschiebung der Koppelstange 48, die wiederum auf den Höheneinstellmechanismus 50 übertragen wird.

Auch bei dieser Ausführungsvariante der Kraftmesseinrichtung 60 liefert der Kraftmessbolzen 76 ein in Fig. 4D nicht näher gezeigtes Ausgangssignal 64, das in der Steuer- und/oder Auswerteschaltung 66 zur Generierung eines Stellsignals 68 für den hydraulischen Stellzylinder 70 verarbeitet wird (siehe hierzu Fig. 4B). Das vom Kraftmessbolzen 76 gelieferte elektrische Ausgangssignal 64 liefert einen direkten Zusammenhang zwischen den über das Tiefenführungsrad 36 und dessen Radträger 34 auf die Koppelstange 48 übertragenen Kräfte, insbesondere bei Anlage der Anschlagscheibe 58 an der Anschlagstange 56, wenn das Tiefenführungsrad 36 an seinen oberen Anschlag verschwenkt ist.

Es sei darauf hingewiesen, dass die in den Figuren 4B bis 4D gezeigten Varianten der Kraftmesseinrichtung 60 wahlweise als alternative Ausführungsvarianten anzusehen sind. Es sind jedoch auch Kombinationen dieser Varianten denkbar, so dass mehrere Ausgangssignale von mehreren Kraftmesseinrichtungen 60 gewonnen werden können, was eine genauere Messwerterfassung ermöglicht, sofern dies gewünscht ist. So kann bspw. ein Dehnungsmessstreifen 62 an der Koppelstange 48 angebracht sein, der mit einem Kraftmessbolzen 76 an einer der gezeigten gelenkigen Koppelstellen 78 (Fig. 4C) oder 84 (Fig. 4D) kombiniert sein kann. Wahlweise kann auch ein Dehnungsmessstreifen 62 an der Koppelstange 48 angebracht sein, der mit einem Kraftmessbolzen 76 sowohl an der gezeigten gelenkigen Koppelstellen 78 zum Höheneinstellmechanismus 50 (Fig. 4C) als auch an der gelenkigen Koppelstelle 84 zum schwenkbaren Radträger 34 (Fig. 4D) kombiniert sein kann. Ebenso denkbar ist die Kombination zweier Kraftmessbolzen 76 ohne gleichzeitigen Einsatz eines Dehnungsmessstreifens 62 an der Koppelstange 48.

Die mindestens eine Kraftmesseinrichtung 60 dient im vorliegenden Zusammenhang der Erfassung von auf die Säeinheit 12 wirkenden Kräften, die in unmittelbarem Zusammenhang mit den Anpressdrücken stehen, die auf das Tiefenführungsrad 36 wirken und die je nach Bodenverhältnissen mehr oder weniger stark schwanken können. Da eine solche Säeinheit 12, wie sie in den Figuren 1 bis 4D gezeigt ist, mit möglichst gleichmäßigem Druck arbeiten soll, der über das Tiefenführungsrad 36 sowie teilweise über das mindestens eine Säschar 38 oder die Säschare 38 in den Boden eingeleitet wird, sind normalerweise regelbare Stellzylinder 70 oder andere geeignete Stelleinrichtungen vorhanden, die über einen Maschinenrahmen der jeweiligen Säeinheit 12 bzw. der Sämaschine 10 auf die Säeinheit 12 bzw. auf das jeweilige höhenverstellbare Tiefenführungsrad 36 bzw. auf das Säschar 38 wirken und auf diese Weise in die Lage versetzt sind, eine variable Anpresskraft auf die Säeinheit 12 auszuüben. Durch die Regelbarkeit solcher Stellzylinder 70 oder Stelleinrichtungen auf Grundlage der der jeweiligen Säeinheit 12 zugeordneten Kraftmesseinrichtung 60 kann der Bodendruck bzw. Schardruck im Betrieb der Sämaschine 10 weitgehend konstant bzw. innerhalb definierbarer Grenzwerte gehalten werden.

Obwohl die Erfindung unter Bezugnahme auf eine bevorzugte Ausführungsform beschrieben wurde, ist es jedoch für einen Fachmann vorstellbar, dass Abwandlungen oder Änderungen der Erfindung gemacht werden können, ohne dabei den Schutzbereich der nachstehenden Ansprüche zu verlassen. Aus diesem Grund sollten die Ansprüche mit Blick auf ihren tatsächlichen Schutzumfang, ihren Inhalt und ihre tatsächliche Bedeutung gelesen werden.

### Bezuaszeichenliste

- 10: Sämaschine, landwirtschaftliche Sämaschine
- 12: Säeinheit
- 14: Korntank, zentraler Korntank
- 16: Fahrgestell
- 18: Tragrad
- 20: Zugdeichsel
- 22: Querträger
- 24: Stützrad
- 26: Fahrtrichtung
- 28: Aufhängung, höhenverstellbare Aufhängung
- 30: Flanschplatte
- 32: Tragrahmen
- 34: Radträger
- 36: Tiefenführungsrad
- 38: Säschar, Säscheibe, Scheibenschar
- 40: Rückverfestigungswerkzeug
- 42: Rad, Rückverfestigungsrad
- 44: Ausleger
- 46: Schwenkachse
- 48: Koppelstange
- 50: Höheneinstellmechanismus
- 52: Rahmenblech
- 54: Lochraster
- 56: Anschlagstange
- 58: Anschlagscheibe
- 60: Kraftmesseinrichtung
- 62: Dehnungsmessstreifen
- 64: Ausgangssignal
- 66: Steuer- und/oder Auswerteschaltung
- 68: Stellsignal
- 70: Stellzylinder, hydraulischer Stellzylinder
- 72: oberer Lenker (der Aufhängung)
- 74: Ausleger (des Tragrahmens)
- 76: Kraftmessbolzen
- 78: Gelenkstelle, gelenkige Koppelstelle
- 80: Schwenkachse
- 82: Schwenkgelenk
- 84: Schwenkachse
- 86: Gelenkstelle, gelenkige Koppelstelle

## Patentansprüche

1. Säeinheit (12) einer Sämaschine (10) mit einem Tragrahmen (32), an dem schwenkbeweglich mindestens ein Radträger (34) mit einem höhenverstellbaren Tiefenführungsrad (36) gelagert ist, wobei der um eine im Wesentlichen quer zu einer Fahrtrichtung (26) angeordnete Achse (46) schwenkbewegliche Radträger (34) über eine in etwa horizontal und parallel zur Fahrtrichtung (26) liegende mindestens eine Koppelstange (48) gelenkig mit einem Höheneinstellmechanismus (50) für eine Höheneinstellbarkeit des Tiefenführungsrades (36) gekoppelt ist, und wobei der mindestens einen Koppelstange (48) und/oder deren Gelenk- und/oder Verbindungsstellen (84 bzw. 78) mit dem schwenkbeweglichen Radträger (34) oder mit dem Höheneinstellmechanismus (50) mindestens eine Kraftmesseinrichtung (60) zur Erfassung der im Betrieb der Säeinheit (12) auf die Koppelstange (48) und/oder deren Gelenk- und/oder Verbindungsstellen (84 bzw. 78) mit dem schwenkbeweglichen Radträger (34) oder mit dem Höheneinstellmechanismus (50) wirkenden Druck- und/oder Zugspannungen zugeordnet ist, **dadurch gekennzeichnet, dass** der Höheneinstellmechanismus (50) durch ein Lochraster (54) zur variablen Aufnahme einer Anschlagstange (56) gebildet ist, die mit einer an der Koppelstange (48) angelenkten und durch diese verschwenkte Anschlagscheibe (56) zusammenwirkt und dass die Anschlagscheibe (58) durch Anlage an die in ein gewünschtes Aufnahmeloch des Lochrasters (54) eingeschobene Anschlagstange (56) den maximalen Schwenkweg des Radträgers (34) und damit die Eintauchtiefe des Tiefenführungsrads (36) gegenüber dem Tragrahmen (32) und damit gegenüber der gesamten Säeinheit (12) begrenzt.

2. Säeinheit nach Anspruch 1, bei der die mindestens eine Kraftmesseinrichtung (60) durch einen auf Dehnungen und/oder Stauchungen sensitiven Sensor gebildet ist, dessen elektrischer Widerstand oder dessen spezifischer Widerstand sich mit auf den Sensor wirkenden Dehnungen und/oder Stauchungen verändert.

3. Säeinheit nach Anspruch 1 oder 2, bei der die mindestens eine Kraftmesseinrichtung (60) durch einen auf Dehnungen und/oder Stauchungen sensitiven Sensor gebildet ist, dessen elektrische Kapazität sich mit auf den Sensor wirkenden Dehnungen und/oder Stauchungen verändert.

4. Säeinheit nach einem der Ansprüche 1 bis 3, bei der die mindestens eine Kraftmesseinrichtung (60) durch wenigstens einen Dehnungsmessstreifen (62) gebildet ist.

5. Säeinheit nach Anspruch 4, bei der die mindestens eine Kraftmesseinrichtung (60) durch wenigstens zwei schaltungstechnisch gekoppelte Dehnungsmessstreifen (62) mit zueinander nicht parallelen Hauptmessrichtungen gebildet ist.

6. Säeinheit nach einem der Ansprüche 1 bis 5, bei der die mindestens eine Kraftmesseinrichtung (60) an einer Oberfläche der Koppelstange (48) angebracht ist oder einen baulichen Teil der Koppelstange (48) bildet und/oder baulich in diese integriert ist.

7. Säeinheit nach einem der Ansprüche 1 bis 5, bei der die mindestens eine Kraftmesseinrichtung (60) durch einen Kraftmessbolzen (76) gebildet ist, der einer der Gelenkstellen (84 bzw. 78) und/oder Verbindungsstellen der Koppelstange (48) mit dem schwenkbeweglichen Radträger (34) bzw. mit dem Höheneinstellmechanismus (50) zugeordnet ist.

8. Säeinheit nach Anspruch 7, bei der die mindestens eine Kraftmesseinrichtung (60) durch einen der Gelenkstelle (84) und/oder Verbindungsstelle der Koppelstange (48) zum schwenkbeweglichen Radträger (34) zugeordneten Kraftmessbolzen (76) gebildet ist.

9. Säeinheit nach Anspruch 7, bei der die mindestens eine Kraftmesseinrichtung (60) durch einen der Gelenkstelle (78) und/oder Verbindungsstelle der Koppelstange (48) zum Höheneinstellmechanismus (50) zugeordneten Kraftmessbolzen (76) gebildet ist.

10. Säeinheit nach einem der Ansprüche 1 bis 9, bei der die mindestens eine Kraftmesseinrichtung (60) signaltechnisch mit einer Steuer- und/oder Auswerteschaltung (66) gekoppelt ist, die einen Stellzylinder (70) zur Variation des Schardrucks der Säeinheit (12) ansteuert.

11. Sämaschine (10) mit wenigstens zwei Säeinheiten (12) gemäß einem der Ansprüche 1 bis 10 und mit einer Steuer- und/oder Auswerteschaltung (66), die für die Verarbeitung der Sensordaten (64) der wenigstens zwei Kraftmesseinrichtungen (60) der wenigstens zwei Säeinheiten (12) ausgestattet bzw. vorbereitet ist, und die jeweils den einzelnen Säeinheiten (12) zugeordnete separate Stellzylinder (70) zur Variation des jeweiligen Schardrucks ansteuert.

12. Sämaschine nach Anspruch 11, bei der eine Mehrzahl gleichartiger Säeinheiten (12) gemäß einem der Ansprüche 1 bis 10 angebracht sind, wobei diese Säeinheiten (12) jeweils alle mit in etwa gleichem Schardruck beaufschlagbar sind oder wobei einzelne oder mehrere Säeinheiten (12) jeweils mit unterschiedlichen Schardrücken beaufschlagbar sind.

## Claims

1. A sowing unit (12) of a sowing machine (10), with a carrier frame (32), to which at least one wheel carrier (34) with a height-adjustable depth guidance wheel (36) is mounted in a swivelably movable manner, wherein the wheel carrier (34), which is swivelably movable about an axis (46) disposed essentially transversely to a driving direction (26), is coupled with a height-setting mechanism (50) for a height adjustability of the depth guidance wheel (36) in an articulated manner by way of at least one coupling rod (48) disposed approximately horizontal and parallel to to the driving direction (26), and wherein at least one force measuring device (60) for the detection of the compressive stresses and/or tensile stresses acting upon the coupling rod (48) and/or upon its points of articulation and/or upon its points of connection (84 or 78, as applicable) to the swivelably movable wheel carrier (34) or to the height-setting mechanism (50) during operation of the sowing unit (12) is assigned to the at least one coupling rod (48) and/or to its points of articulation and/or to its points of connection (84 or 78, as applicable) to the swivelably movable wheel carrier (34) or to the height-setting mechanism (50), **characterised in that** the height-setting mechanism (50) is formed by a hole matrix (54) for the variable reception of a stop rod (56), which interacts with a stop plate (58) hinged to and swivelled by the coupling rod (48), and **in that** the stop plate (58) delimits the maximum swivel range of the wheel carrier (34), and thus the insertion depth of the depth guidance wheel (36), in relation to the carrier frame (32), and thus in relation to the entire sowing unit (12), by contiguous contact to the stop rod (56) inserted into a desired reception hole of the hole matrix (54).

2. The sowing unit according to claim 1, in which the at least one force measuring device (60) is formed by a sensor that is sensitive to distensions and/or compressions, with the electrical resistance or the specific resistance of the sensor changing with the distensions and/or compressions acting upon the sensor.

3. The sowing unit according to claim 1 or 2, in which the at least one force measuring device (60) is formed by a sensor that is sensitive to distensions and/or compressions, with the electrical capacitance of the sensor changing with the distensions and/or compressions acting upon the sensor.

4. The sowing unit according to one of the claims 1 to 3, in which the at least one force measuring device (60) is formed by at least one strain gauge (62).

5. The sowing unit according to claim 4, in which the at least one force measuring device (60) is formed by at least two strain gauges (62) with main measuring directions that are not parallel to each other, the strain gauges (62) being coupled by circuitry.

6. The sowing unit according to one of the claims 1 to 5, in which the at least one force measuring device (60) is mounted to a surface of the coupling rod (48) or forms a structural part of the coupling rod (48) and/or is structurally integrated with the coupling rod (48).

7. The sowing unit according to one of the claims 1 to 5, in which the at least one force measuring device (60) is formed by a load pin (76), which is assigned to one of the points of articulation (84 or 78, as applicable) and/or points of connection of the coupling rod (48) to the swivelably movable wheel carrier (34) or to the height-setting mechanism (50), as applicable.

8. The sowing unit according to claim 7, in which the at least one force measuring device (60) is formed by a load pin (76) assigned to the point of articulation (84) and/or to the point of connection of the coupling rod (48) to the swivelably movable wheel carrier (34).

9. The sowing unit according to claim 7, in which the at least one force measuring device (60) is formed by a load pin (76) assigned to the point of articulation (78) and/or to the point of connection of the coupling rod (48) to the height-setting mechanism (50).

10. The sowing unit according to one of the claims 1 to 9, in which the at least one force measuring device (60) is signal-coupled with a control circuit and/or an evaluation circuit (66), which controls a positioning cylinder (70) for varying the coulter pressure of the sowing unit (12).

11. A sowing machine (10), with at least two sowing units (12) according to one of the claims 1 to 10, and with a control circuit and/or an evaluation circuit (66), which is equipped or prepared, as applicable, for the processing of the sensor data (64) from the at least two force measuring devices (60) of the at least two sowing units (12), and which in each case controls the separate positioning cylinders (70), which are assigned to the individual sowing units (12), for varying the particular coulter pressure.

12. The sowing machine according to claim 11, to which a plurality of alike sowing units (12) according to one of the claims 1 to 10 are mounted, wherein approximately the same coulter pressure is applicable in each case to all of the said sowing units (12), or wherein different coulter pressures are applicable in each case to individual or to a plurality of sowing units (12).

## Revendications

1. Élément semeur (12) d'un semoir (10) doté d'un châssis porteur (32), sur lequel est disposé de manière pivotante au moins un support de roue (34) doté d'une roue de jauge (36) réglable en hauteur, ledit support de roue (34), qui est susceptible de pivoter autour d'un axe (46) agencé sensiblement à la perpendiculaire d'un sens de marche (26), étant couplé de manière articulée, par le biais d'au moins une bielle (48) montée approximativement à l'horizontal et parallèle au sens de la marche (26), à un mécanisme de réglage de hauteur (50) pour que la roue de jauge (36) soit réglable en hauteur, et étant associés à ladite au moins une bielle (48) et/ou à ses points d'articulation et/ou de liaison (84 voire 78) avec le support de roue (34) pivotant ou avec le mécanisme de réglage de hauteur (50) au moins un appareil de mesure de force (60) destiné à détecter les forces de pression et/ou de traction agissant, lorsque l'élément semeur (12) est en marche, sur la bielle (48) et/ou ses points d'articulation et/ou de liaison (84 voire 78) avec le support de roue (34) pivotant ou avec le mécanisme de réglage de hauteur (50), **caractérisé en ce que** le mécanisme de réglage de hauteur (50) est constitué par une trame perforée (54) destinée à recevoir de manière variable une barre de butée (56) qui coopère avec un disque de butée (58) articulé sur la bielle (48) et qui est mis en pivotement par celui-ci, et que le disque de butée (58) limite, par mise en appui sur la barre de butée (56) insérée dans un trou d'accueil souhaité de la trame perforée (54), la trajectoire maximale de pivotement du support de roue (34) et ainsi, la profondeur de pénétration de la roue de jauge (36) par rapport au châssis porteur (32) et ainsi par rapport à l'ensemble de l'élément semeur (12).

2. Élément semeur selon la revendication 1, dans lequel l'au moins un appareil de mesure de force (60) est constitué d'un capteur sensible aux allongements et/ou aux tassements, et dont la résistance électrique ou la résistance spécifique se modifie au gré des allongements et/ou tassements agissant sur le capteur.

3. Élément semeur selon la revendication 1 ou 2, dans lequel l'au moins un appareil de mesure de force (60) est constitué d'un capteur sensible aux allongements et/ou aux tassements, et dont la capacité électrique se modifie au gré des allongements et/ou tassements agissant sur le capteur.

4. Élément semeur selon l'une quelconque des revendications 1 à 3, dans lequel l'au moins un appareil de mesure de force (60) est constitué d'au moins un extensomètre (62).

5. Élément semeur selon la revendication 4, dans lequel l'au moins un appareil de mesure de force (60) est constitué d'au moins deux extensomètres (62) connectés en circuit et dont les principaux sens de mesure ne sont pas parallèles les uns aux autres.

6. Élément semeur selon l'une quelconque des revendications 1 à 5, dans lequel l'au moins un appareil de mesure de force (60) est monté sur une surface de la bielle (48) ou constitue une pièce de la bielle (48) et/ou est intégré dans la structure de celle-ci.

7. Élément semeur selon l'une quelconque des revendications 1 à 5, dans lequel l'au moins un appareil de mesure de force (60) est constitué d'un boulon de mesure de force (76) qui est associé à un des points d'articulation (84 voire 78) et/ou des points de liaison de la bielle (48) avec le support de roue (34) pivotant voire avec le mécanisme de réglage de hauteur (50).

8. Élément semeur selon la revendication 7, dans lequel l'au moins un appareil de mesure de force (60) est constitué d'un boulon de mesure de force (76) associé au point d'articulation (84) et/ou point de liaison de la bielle (48) au support de roue (34) pivotant.

9. Élément semeur selon la revendication 7, dans lequel l'au moins un appareil de mesure de force (60) est constitué d'un boulon de mesure de force (76) associé au point d'articulation (78) et/ou point de liaison de la bielle (48) avec le mécanisme de réglage de hauteur (50).

10. Élément semeur selon l'une quelconque des revendications 1 à 9, dans lequel l'au moins un appareil de mesure de force (60) est couplé en termes de signaux à un circuit de commande et/ou d'analyse (66) qui pilote un vérin (70) destiné à faire varier la pression du soc de l'élément semeur (12)

11. Semoir (10) doté d'au moins deux éléments semeurs (12) selon l'une quelconque des revendications 1 à 10 et doté d'un circuit de commande et/ou d'analyse (66) qui est équipé voire prévu pour le traitement des données captées (64) par lesdits au moins deux appareils de mesure de force (60) desdits au moins deux éléments semeurs (12), et qui commande les vérins (70) individuels associés respectivement à chacun des éléments semeurs (12) pour faire varier la pression de soc respective.

12. Semoir selon la revendication 11, dans lequel sont montés une pluralité d'éléments semeurs (12) similaires selon l'une quelconque des revendications 1 à 10, lesdits éléments semeurs (12) étant susceptibles d'être tous soumis à une pression de soc sensiblement égale ou des éléments semeurs (12) individuels ou plusieurs éléments semeurs (12) étant susceptibles d'être soumis chacun à une pression de soc différente.
